# EUROPÄISCHE PATENTSCHRIFT

(11) **EP 2 125 536 B1**
(45) Veröffentlichungstag und Bekanntmachung des Hinweises auf die Patenterteilung: **13.10.2010**
(21) Anmeldenummer: 07857699.8
(22) Anmeldetag: 17.12.2007
(51) Int. Cl.: B65D 1/10, B65D 1/26, B29C 49/06, C08L 25/06, C08L 25/12, B32B 27/08

(54) **HOHLKÖRPER AUS SCHLAGZÄHEM POLYSTYROL, SPRITZSTRECKBLASVERFAHREN ZU SEINER HERSTELLUNG UND VERWENDUNG DES HOHLKÖRPERS**
HOLLOW HIGH IMPACT POLYSTYRENE BODY, METHOD OF ITS MANUFACTURING BY INJECTION STRETCH BLOW MOULDING AND USE OF HOLLOW BODY
MÉTHODE DE FABRICATION D'UN CORPS CREUX EN POLYSTYRENE CHOC OBTENU PAR INJECTION-ÉTIRAGE-SOUFFLAGE ET SON UTILISATION

(30) Priorität: 28.02.2007 EP 07103233
(43) Veröffentlichungstag der Anmeldung: 02.12.2009
(73) Patentinhaber: BASF SE, 67056 Ludwigshafen (DE)
(72) Erfinder: BURGDÖRFER, Stefan, 67112 Mutterstadt (DE); HECKMANN, Walter, 69469 Weinheim (DE); RENNER, Hans-Jürgen, 67141 Neuhofen (DE); SCHADE, Christian, 67063 Ludwigshafen (DE); SCHWABEN, Hans-Dieter, 76835 Rhodt (DE)
(86) Internationale Anmeldenummer: PCT/EP2007/064069
(87) Internationale Veröffentlichungsnummer: WO 2008/040821

(56) Entgegenhaltungen:
- EP-A- 1 157 806
- DE-T2- 60 202 135
- JP-A- 2005 145 560
- US-A- 3 536 500
- US-A- 4 480 979
- US-A- 5 068 078
- US-A1- 2003 039 779
- US-B1- 6 376 095
- US-B1- 6 585 125

## Beschreibung

Die Erfindung betrifft einen Hohlkörper mit einem Fassungsvolumen von mindestens 250 ml, dessen Hülle aus schlagzähem Polystyrol besteht und durch Spritzstreckblasen hergestellt wird.

Außerdem betrifft die Erfindung das Verfahren zur Herstellung dieses Hohlkörpers und die Verwendung der Hohlkörper.

Unter Polystyrol wird kautschukfreies oder kautschukhaltiges Polystyrol, Styrol-Butadien Copolymere sowie Mischungen aus den Polymeren und/oder Blockcopolymeren verstanden.

Kautschukfreies Polystyrol wird auch als GPPS (general purpose polystyrene) bezeichnet.

Übliche kautschukhaltige Styrolpolymere enthalten eine Kautschukphase auf Basis von Dienen, die in einer Hartmatrix aus Styrolpolymer dispergiert ist. So enthält schlagzähes Polystyrol (HIPS, high impact polystyrene) eine Polystyrol-Hartmatrix und darin dispergierte beispielsweise Polybutadien-Kautschukteilchen. Es wird erhalten, indem man zunächst einen Kautschuk - z.B. in Lösung - herstellt, den Kautschuk in Styrol löst und die Mischung anschließend zum HIPS polymerisiert.

Weiterhin werden unter Polystyrol auch Styrol-Butadien Blockcopolymere verstanden.

Die Herstellung von kleineren Hohlkörpern aus Polystyrol durch Blasformen ist bereits bekannt und wird in sehr geringem Umfang betrieben. Beispielsweise sind die 65 ml Trinkjoghurt-Gefäße der Fa. Yakult oder 200 ml Joghurtbecher der Marke Landliebe® der Molkerei Campina im Handel. Diese Hohlkörper besitzen allerdings ein geringes Aufblasverhältnis. Durch mechanische Belastung lassen sich diese Behältnisse einspleißend zerbrechen. Transportsichere Gefäße mit einem größeren Fassungsvolumen lassen sich mit dieser Technik nicht herstellen. Die Spleißneigung eines Gefäßes steigt beim Aufprall aus beispielsweise einem Meter Höhe mit dem Füllvolumen/gewicht schlagartig an.

In der JP 2005-145560 werden durch Spritzblasen erhältliche Getränkebehälter beschrieben. Die Behälter werden mit einem schlagzähen Polystyrol hergestellt, das einen Restgehalt von weniger als 100 ppm Styrol und weniger als 150 ppm flüchtiger organischer Substanzen insgesamt aufweist und durch ein Extraktionsverfahren aus Polystyrolen mit höheren Restgehalten hergestellt wird. Die geformten Behälter haben ein Fassungsvermögen von 138 ml. Artikel, die weniger als 1 % Kautschukgehalt besitzen, haben nicht mehr erstrebenswerte organoleptische Eigenschaften.

In der JP 2005-225960 wird vorgeschlagen Extrusionsblasverfahren anzuwenden, um größere Behälter wie beispielsweise Badewannen herzustellen. Hier wird hochmolekulare HIPS mit einem mittleren Molgewicht von 250 - 300.000 Dalton und einer definierten Molmassenverteilung zu blasgeformten Artikeln umgesetzt. Für die Herstellung von Hohlkörpern, wie beispielsweise Flaschen, die sehr genaue Geometrien - insbesondere im Gewinde- und Verschlussbereich der Hohlkörper - aufweisen, ist das Extrusionsblasverfahren nicht geeignet. Für andere Verfahren wie beispielsweise das Spritzblasen weist das obengenannte hochmolekulare HIPS eine zu geringe Fließfähigkeit auf und kann deshalb für dieses Verfahren nicht eingesetzt werden.

Größere Hohlkörper wie beispielsweise Flaschen werden deshalb bisher aus anderen Werkstoffen, insbesondere PET, PP, PVC oder PC hergestellt. Als Herstellverfahren haben sich für diese Gegenstände insbesondere das Spritzblasen und Spritzstreckblasen entwickelt. Information zum Spritzblasen und Spritzstreckhlasen: http://en.wikipedia.org/wiki/Blow_molding.

Die im Getränkesektor erfolgreiche PET-Flasche ist zur Abfüllung von Molkereiprodukten, die lebende Kulturen wie Yoghurt, Kefir, Molke etc. enthalten, weniger geeignet. Andere Materialien, die eine höhere Durchlässigkeit für Sauerstoff oder Kohlendioxid aufweisen, sind vom Spleißverhalten nicht befriedigend. Aufgrund der bisher ungenügenden Transportsicherheit sind diese Materialen zum Abfüllen von Gefahrgütern wie ätzenden Flüssigkeiten bisher kaum verwendet worden. Auch reicht die chemische Beständigkeit gegenüber Materialien wie beispielsweise starken Basen nicht aus.

Das Ziel der vorliegenden Erfindung bestand nunmehr darin, Hochleistungsflaschen mit einem Volumen von größer 250 ml für insbesondere die obengenannten Anwendungszwecke zu entwickeln.

Überraschenderweise wurde nun gefunden, dass die eingangs erwähnten Hohlkörper mit einem Fassungsvolumen von mindestens 250 ml, deren Hüllen aus schlagzähem Polystyrol bestehen und die durch Spritzstreckblasen hergestellt sind, die obengenannten Anforderungen erfüllen. Im Vergleich zur PET-Flasche können bis zu 25 % des Gewichts eingespart werden, ohne dass die Eigenschaften der Flasche signifikant schlechter werden. Dadurch verringern sich die Transportkosten erheblich. Weiterhin benötigt man zur Herstellung der erfindungsgemäßen Hohlkörper wesentlich geringere Blasdrucke, was zu einem geringeren Apparateaufwand und einer Einsparung beim Herstellprozess führt.

Für die Herstellung der erfindungsgemäßen Hohlkörper ist schlagzähes Polystyrol (HIPS) geeignet.

HIPS weist vorzugsweise ein mittleres Molekulargewicht von 150.000 - 240.000 D, eine Fließfähigkeit von 2 - 20 ml/10min, gemessen bei 200°C/5 kg nach ISO 1133, einen Kautschukgehalt von .2 - 10 % und einen Reststyrolgehalt von weniger als 500 ppm, besonders bevorzugt weniger als 250 ppm.

In einer besonderen Einstellung werden HIPS-Typen verwendet, deren Schwefelgehalt unter 30 ppm, bevorzugt unter 10 ppm liegt. Damit sind mit dem erfindungsgemäßen Verfahren erstmals Hohlkörper mit einer Hülle aus schlagzähem Polystyrol mit derart niedrigem Schwefelgehalt bereitgestellt worden. Eine besondere Ausführungsform der vorliegenden Erfindung ist demnach ein Hohlkörper zugänglich mittels Spritzstreckblasen aus HIPS, dessen Schwefelgehalt unter 30 ppm, bevorzugt unter 10 ppm liegt.

Die spritzstreckgeblasenen Hohlkörper aus schlagzähem Polystyrol weisen eine biaxiale Verstreckung der Kautschukteilchen auf Der Verstreckungsgrad der Kautschukteilchen kann durch das Aspektverhältnis der Teilchen elektronenmikroskopisch mittels TEM-Aufnahmen bestimmt werden. Das Ausmaß der Biaxialität ergibt sich aus einem Vergleich der Aspektverhältnisse von längs und quergeschnittenen Proben. In einer typischen Sektion der Seitenwand sollten die Quotienten der mittleren Aspektverhältnisse aus Längsschnitt und Querschnitt kleiner als 3, bevorzugt, kleiner als 2, ganz besonders bevorzugt kleiner als 1,5 sein. Die vorliegende Erfindung umfasst demnach auch Hohlkörper, zugänglich mittels Spritzstreckblasen, wobei die biaxiale Verstreckung der HIPS-Kautschukteilchen ein mittleren Aspektverhältnis aus Längsschnitt und Querschnitt gemessen in TEM-Aufnahmen kleiner als 3, bevorzugt kleiner als 2, ganz besonders bevorzugt kleiner als 1,5 aufweist.

Im Unterschied von unorientierten Proben weisen die durch Spritzstreckblasen hergestellten Hohlkörper ein mittleres Aspektverhältnis in Längsrichtung von in der Regel größer 4, bevorzugt größer 7 und ganz besonders bevorzugt größer 10 auf. Die Aspektverhältnisse in Querrichtung weisen ähnlich hohe Werte auf, sodass das Verhältnis Längs- zu Querrichtung (Biaxialität) wie oben erwähnt kleine Werte einnimmt.

GPPS weist vorzugsweise ein mittleres Molekulargewicht von 150.000 - 350.000 D eine Fließfähigkeit von 1 - 20 ml/10 min, gemessen bei 200°C/5 kg nach ISO 1133, und einen Gehalt an Reststyrol von unter 500 ppm, besonders bevorzugt unter 300 ppm auf.

Als Styrol-Butadien Blockcopolymere X0 können beispielsweise die in der WO 06/074819 beschriebenen Blockcopolymere eingesetzt werden.

Ein sternförmiges Blockcopolymer X1 (26 Gew.-% Butadien, 74 Gew.-% Styrol) mit statistischen Copolymerblöcken B/S wurde durch sequentielle anionische Polymerisation von Styrol und Butadien und anschließende Kopplung mit epoxidiertem Leinöl entsprechend Beispiel 15 aus WO 00/58380 hergestellt.

Die Blockcopolymermischungen X2 wurden nach den Angaben in WO 06/074819 durch sequentielle anionische Polymerisation mit zweifacher Initiatordosierung (sec.-Butyl-lithium) in Stufe 1 oder 2 bei einem Feststoffgehalt von ca. 30 Gew.-% in Cyclohexan bei Temperaturen im Bereich von 50 - 800C hergestellt. Nach Beendigung der Polymerisation wurde mit Isopropanol abgebrochen und mit CO2/Wasser angesäuert. Die Polymerisation wurde in Gegenwart von Kalium-tertiär-Amylat bei einem molaren Lithium/Kalium-Verhältnis von 38/1 durchgeführt, um einen statistischen S/B-Copolymerblock zu erhalten. Die Blockcopolymeren wurden auf einem Entgasungsextruder vom Lösungsmittel befreit.

Die erhaltenen Blockcopolymermischungen enthalten Blockcopolymere mit statistischen Copolymerblöcken der Struktur (I) S1-(B/S)a-(B/S)b-S2 mit einem zahlenmittleren Molekulargewicht von etwa 150.000 g/mol und der Struktur (II) (B/S)a-(B/S)b-S3 mit einem zahlenmittleren Molekulargewicht von etwa 75.000 g/mol im molaren Verhältnis (I)/(II) entsprechend dem Initiatorverhältnis I1/12.

Styrol-Acrylnitril-Copolymere ("SAN") sowie Verfahren zu deren Herstellung sind dem Fachmann bekannt und in der Literatur beschrieben ,beispielsweise in Ullmann's Encyclopedia of Industrial Chemistry, Wiley-VCh Verlag GmbH & Co. KgaA, Weinheim, 7. Auflage 2007, Kapitel "Polystyrene and Styrene Copolymers".

Bevorzugte SAN, Komponente B, sind erhältlich durch Umsetzung von
60 bis 99 Gew.-%, bevorzugt 60 bis 85 Gew.-%, besonders bevorzugt 64 bis 82 Gew.-% Komponente b1,
1 bis 40 Gew.-%, bevorzugt 15 bis 40 Gew.-%, besonders bevorzugt 18 bis 36 Gew.-% Komponente b2, und
0 bis 40 Gew.-%, bevorzugt 0 bis 25 Gew.-%, besonders bevorzugt 0 bis 17 Gew.-% Komponente b3 (die Gew.-% sind jeweils bezogen auf das Gewicht der Komponente B).

Als Komponente b1 wird Styrol, α-Methylstyrol oder ein Gemisch dieser Verbindungen eingesetzt, bevorzugt ist Styrol.

Komponente b2 ist Acrylnitril.

Als Komponente b3 sind prinzipiell alle von den Komponenten b1 und b2 verschiedene ungesättigten Monomere einsetzbar.

Bevorzugte Komponente B ist Styrol-Acrylnitril, Poly-α-Methylstyrol-Acrylnitril oder deren Mischungen.

Die SAN können nach an sich bekannten Verfahren hergestellt werden, wie durch Substanz-, Lösung-, Suspensions- oder Emulsions-Polymerisation, bevorzugt durch Lösungspolymerisation (siehe GB-A 14 72 195). Bevorzugt sind dabei SAN mit Molmassen M_{w} von 60.000 bis 300.000 g/mol, bestimmt durch Lichtstreuung in Dimethylformamid. In einer bevorzugten Ausführungsform wird SAN nach der Herstellung nach dem Fachmann bekannten Verfahren isoliert und vorzugsweise zu Granulat verarbeitet.

Die für die Herstellung der erfindungsgemäßen Flaschen verwendeten Formmassen können übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, Nukleierungsmittel und Verträglichkeitsvermittler enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden. Besonders vorteilhaft werden in den Hohlkörpern weißpigmentierte und insbesondere mit Titandioxid-pigmentierte Polystyrol oder SAN-Formmassen eingesetzt. Diese weisen eine höhere Kratzfestigkeit auf.

Als Keimbildungsmittel können Natriumphenylphosphinat, Aluminiumoxid, Siliziumdioxid sowie bevorzugt Talkum-eingesetzt werden.

Weitere Gleit- und Entformungsmittel werden üblicherweise in Mengen bis zu 1 Gew.-% eingesetzt. Es sind bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie Ca- oder Na-Montanat sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Zur Herstellung der Hohlkörper wird das in der eingangs erwähnten Literatur beschriebene Spritzstreckblasen verwendet. Hierzu wird i) ein Granulat aus schlagzähem Polystyrol aufgeschmolzen und zu einem Vorformling spritzgegossen. Anschließend wird ii) der gebildete Vorformling in ein zweites Werkzeug übergeführt und dort gestreckt und geblasen.

Bei der Herstellung von Flaschen hat sich ein Blasdruck von nicht mehr als 15 bar, bevorzugt nicht mehr als 10 bar und ganz besonders bevorzugt nicht mehr als 5 bar als vorteilhaft herausgestellt. SAN und schlagzähes Polystyrol lässt sich folglich bei wesentlich niedrigeren Drücken verarbeiten als das üblicherweise eingesetzte PET.

Die Vorstreckergeschwindigkeit liegt üblicherweise bei 0,1 - 2 m/s, vorzugsweise bei.0,2 - 1 m/s.

Üblicherweise werden die Granulate bei Temperaturen von 200 - 260°C spritzgegossen. Erhalten werden solche Gefäße durch Spritzguss unterhalb von 280°C, bevorzugt unterhalb von 260°C, ganz besonders bevorzugt unterhalb von 240°C. Zusätzlich kann die Schmelze unter weitgehendem Sauerstoffausschluss im Spritzguss verarbeitet werden, beispielsweise durch Überdecken des Granulats mit einem Stickstoffstrom im Einzugsbereich der Spritzgussmaschine.

Anschließend wird bei 110 - 190°C geblasen. Bei HIPS liegt die Verarbeitungstemperatur bevorzugt im Bereich von 120 -145°C.

Um Flaschen mit einem Restgehalt an Aldehyd von unter 10 ppm herzustellen, hat es sich als günstig erwiesen, schonende Verarbeitungsbedingungen insbesondere beim Spritzgießen zu wählen. Bevorzugt wird in diesen Fällen unter Sauerstoffausschluss, beispielsweise unter Stickstoffatmosphäre, gearbeitet.

Es können auch literaturbekannte Stoffe, die die Aldehyde ganz oder teilweise abbinden, wie beispielsweise Zeolithe, Aldehydfänger, wie sie auch bei anderen Werkstoffen (z. B. Polyestern) eingesetzt werden, hydrophobierte Zuckerderivate etc zugesetzt werden.

Durch das erfindungsgemäße Verfahren gelingt es u. a., Flaschen mit hoher Steifigkeit aus HIPS herzustellen. Abschnitte der Seitenwand der erfindungsgemäßen Formkörper besitzen E-Module, die um mindestens 10 %, bevorzugt mindestens 20 %, ganz besonders bevorzugt um mehr als 25 % größer sind als die unter Normbedingungen am selben Material bestimmten Module. Der Grad der biaxialen Orientierung wurde durch TEM-Präparation einmal parallel (senkrechter Querschnitt) und einmal quer zur Achsenrichtung (horizontaler Querschnitt) ermittelt.

Sofern die Flaschen/Becher für Lebensmittel eingesetzt werden, ist häufig ein Sterilisierungsschritt sinnvoll. Hierzu wird beispielsweise mit wässriger WasserstoffperoxidLösung gespült und anschließend bei 70°C getrocknet.

Die Flaschen können nach bekannten Verfahren weiter gestaltet werden, beispielsweise bedruckt, kartoniert oder mit einem Shrink Sleeve versehen werden. In einer erfindungsgemäßen Ausführung wird der Behälter mit einem Shrink Sleeve versehen, der mindestens ein Styrol-Butadien-Copolymer enthält. Derartige Shrink-Sleeves sind beispielsweise in WO 06/074819 beschrieben. Es ist dadurch möglich, dass Flasche und Shrink-Sleeve gemeinsam stofflich wiederverwertet werden können und auf eine kostentreibende Abtrennung des Sleeves und gesonderte Verwertung der Komponenten verzichtet werden kann.

Wie weiter oben erwähnt eignen sich die erfindungsgemäßen Flaschen/Becher auf Grund der gegenüber PET höheren Gasdurchlässigkeit für die Aufbewahrung beispielsweise von Molkeprodukten. Weiterhin weisen die erfindungsgemäßen Flaschen aufgrund der geringeren Dichte einen deutlichen Vorteil gegenüber PET-Flaschen auf. Aufgrund der hervorragenden Chemikalienbeständigkeit -insbesondere gegen Laugensind die erfindungsgemäßen Flaschen auch hervorragend für die Aufbewahrung von Kosmetik-, Wasch- und Reinigungsmitteln geeignet. Auf der anderen Seite kann es für andere Anwendungen - wie beispielsweise Flaschen für Mineralwasser oder Softdrinks - wünschenswert sein, Hohlkörper herzustellen, die eine höhere Gasbarriere-Eigenschaft aufweisen. Hier haben sich insbesondere Hohlkörper mit einer zweischichtigen Hülle als vorteilhaft herausgestellt. Neben der bereits erwähnten Schicht aus Polystyrol weist die Hülle eine Schicht aus einem Barrierewerkstoff wie Polyamid, PET, PBT, PVC, Styrol/Acrylnitril-Copolymere mit einem Acrylnitrilgehalt von mehr als 50 Gew.-%, Polyvinylidenchlorid oder anderen, literaturbekannten Bärrierekunststoffen auf. Dazu wird der Vorformling in bekannter Weise durch 2K-Spritzguß aus schlagzähem Polystyrol und dem Barrierewerkstoff hergestellt und anschließend zu einer Flasche verblasen.

Geeignete Polyamide mit excellenten Gasbarriereeigenschaften werden beispielsweise in der PCT/EP2006/067471 beschrieben. Flaschen, die durch 2K-Spritzguß aus schlagzähem Polystyrol und dem oben erwähnten Polyamid hergestellt werden, weisen hohe Gasbarrieren auf und sind ebenfalls Gegenstand dieser Erfindung.

### Beispiele

### Charakterisierung der Proben

### TEM-Präparation:

Es wurden jeweils zwei Anschnittsflächen aus der Mitte der Behälterwand präpariert. Einmal parallel (senkrechter Querschnitt) und einmal quer zur Achsenrichtung (horizontaler Querschnitt).

Die Anschnitte wurden in OsO4-Dampf vernetzt/vorkontrastiert und danach ca. 80-100 nm dicke Ultradünnschnitte bei Raumtemperatur entnommen. Die Schnitte wurden anschließend in OsO4-Dampf nachkontrastiert und in einem TEM in 2000-facher Primärvergrößerung mit einer CCD-Kamera aufgenommen.

### Bildauswertung:

Die Bildauswertung erfolgte mit der AnalySIS-Software. Die digitalen Aufnahmen wurden zur Auswertung binarisiert und manuell nachbearbeitet. Die einzelnen verstreckten HIPS-Teilchen wurde, wo notwendig, vor der eigentlichen Messung getrennt und geschlossen.

An den Binärbildern wurden die Aspektverhältnisse der einzelnen Teilchen bestimmt. Als Aspektverhältnis wurde das maximale Höhen-Breiten-Verhältnis eines einhüllenden Rechtecks des Partikels bezeichnet. Auf dem Bildrand liegende Teilchen wurden nicht einbezogen. Die Einzelwerte wurden zur Statistik herangezogen und zur Darstellung einer Verteilung klassifiziert.

### Herstellung der Proben

Polystyrol A: Ein schlagzähes Polystyrol mit einer mittleren Molmasse von 198.000 D, einem Polybutadiengehalt von 7,9 %, einer Fließfähigkeit von 4,4 ml/10 min, einem E-Modul von 1890 MPa und einer Streckspannung von 25,4 MPa.

Polystyrol B: Ein schlagzähes Polystyrol mit einer mittleren Molmasse von 156.000 D, einem Polybutadiengehalt von 8,0 %, einer Fließfähigkeit von 9,6 ml/10 min, einem E-Modul von 1980 MPa und einer Streckspannung von 25,9 Mpa.

Polystyrol C: Ein schlagzähes Polystyrol mit einer mittleren Molmasse von 193.000 D, einem Polybutadiengehalt von 7,9 %, einer Fließfähigkeit von 4,6 ml/10 min, einem E-Modul von 1880 MPa, einer Streckspannung von 25,6 MPa, einem Reststyrolgehalt von 65 ppm, einem Gesamtgehalt an Aldehyden von 2 ppm und einem Schwefelgehalt von 24 ppm.

### Beispiel 1

Es wurden Flaschen mit einem Inhalt von 1 Liter bzw. 0,5 Liter bei 145° mit einem Blasdruck von etwas weniger als 10 bar hergestellt. Die Flaschen ließen sich nicht einspleißend zerdrücken.

| Polystyrol | | B | A | A |
|---|---|---|---|---|
| Volumen | | 1 Liter | 1 Liter | 0,5 Liter |
| E Modul | MPa | 2600 | 2700 | 2500 |
| Streckspannung | MPa | 45 | 52 | 53 |
| Aspektverhältnis längs (TEM) | | 17,8 | 17,4 | 12,0 |
| Aspektverhältnis quer (TEM) | | 19,6 | 24,6 | 16,0 |
| Biaxialität | | 1,10 | 1,41 | 1,33 |

### Beispiel 2

Es werden 500 ml Flaschen mit einem Gewicht von 20,5 g Polystyrol A hergestellt. Flasche 1 wird hergestellt mit einer Vorstreckergeschwindigkeit von 0,4 m/s und einem Blasdruck von 1,7 bar. Flasche 2 wird hergestellt mit einer Vorstreckergeschwindigkeit von 1,4 m/s und einem Blasdruck von 10 bar.

| | Flasche 1 | Flasche 2 |
|---|---|---|
| E-Modul | 2800 | 2730 |
| Streckspannung | 38 MPa | 45 MPa |
| Reißfestigkeit | 36 MPa | 42 MPa |
| Streckdehnung | 1,9% | 2,3% |
| Aspektverhältnis (TEM) quer | 9,9 | 15,3 |
| Aspektverhältnis (TEM) längs | 7,3 | 13,8 |
| Biaxialität | 1,36 | 1,10 |

### Beispiel 3

Aus Polystyrol B wurde eine 1 Liter Flasche bei 130°C, 3 bar Vordruck, 10 bar Blasdruck und einer Vorstreckergeschwindigkeit von 1,4 m/s hergestellt. Die Seitenwand hatte eine mittlere Stärke von 0,18 mm. Die E-Module in Längs- und Querrichtung betrugen 2610 MPa und 2620 MPa; die Streckspannung 52 MPa. Das Aspektverhältnis im TEM betrugen 28,5 und 27,8; die Biaxialität 1,03.

### Vergleichsbeispiel 4

Eine 1 Liter PET-Flasche und die erfindungsgemäße Flasche aus Beispiel 3 wurden mit 1 N wäßriger NaOH befüllt und verschlossen. Anschließend wurden die Flaschen mit einem Gewicht von 3 kg belastet und für 3 Wochen bei Raumtemperatur gelagert. Die erfindungsgemäße Polystyrol-Flasche zeigte keine Spuren eines chemischen Angriffs. Die Innenoberfläche der PET-Flasche dagegen war partiell angequollen und zeigte deutliche Korrosionspuren.

### Beispiel 5

Aus Polystyrol C wurden 1 Liter Flaschen analog zu Beispiel 3 hergestellt. Die Seitenwand hatte eine mittlere Stärke von 0,17 mm. Die E-Module in Längs- und Querrichtung betrugen 2880 MPa und 2740 MPa; die Streckspannung 60 MPa.
Die Flaschen wurden mit Frischmilch befüllt und sensorisch überprüft. Es wurde keinerlei Beeinträchtigung des Füllguts festgestellt.

### Beispiel 6

Eine hoch transparente, zylindrische Flasche aus SAN (Luran 388 S, BASF Aktiengesellschaft) mit einem Volumen von 500 ml wurde in Analogie zu Beispiel 3 hergestellt. Bei der Herstellung des Preforms konnte im Gegensatz zu PET auf eine Vortrocknung verzichtet werden. Im Vergleich zu einer analogen Flasche aus PET war ein deutlich niedrigerer Blasdruck erforderlich: Die Ausformung der SAN-Flasche war exzellent und von hoher Lotrechtigkeit. Die Flasche zeigte eine ausgezeichnete Beständigkeit gegen Chemikalien und spannungsrißauslösende Medien wie Öle.

Weiterhin wurden hochtransparente Weichspülerflaschen (abgeflachte, bauchige Geometrie) in 3 verschiedenen Grössen (250 ml, 750 ml und 800 ml) aus SAN (Luran 368 R, BASF AG) aus einer Preformgeometrie hergestellt. Das Gewicht der 500 ml SAN-Flasche betrug 34,9 g. Zum Vergleich: eine analog zu Beispiel 6 hergestellte 500 ml PET-Flasche wog 40,8 g.

Der Einsatz von SAN gehöst nicht zum Schutzumfang der Erfindung.

### Beispiel 7

Eine mit (0,9 Gew.-% TiO₂) weiß eingefärbte Flasche aus Polystyrol C mit einem Volumen von 480 ml wurde in Analogie zu Beispiel 3 mit einem Blasdruck von ca. 6 bar hergestellt. Die Flasche wurde zusätzlich mit einem ca. 50 µm dicken und 10,7 cm breiten Shrink-Sleeve aus Styrolux HS 70 ummantelt. Die Flasche überstand in gefülltem Zustand einen Fall aus 1 m Höhe ohne Bruch. Die geforderte Stapelfähigkeit (Topload) wurde nachgewiesen, indem eine Europalette mit Flaschen einem Transporttest (LKW-Fahrt) unterzogen wurde, wobei keine Beschädigungen festgestellt wurden.

Die sensorische und mikrobiologische Bewertung eines abgefüllten Molkenmischerzeugnis ergab keine Beeinträchtigungen durch das Flaschenmaterial.

Zerschredderte Flaschen (Sleeve und Flasche) konnten problemlos zu einem Material mit hohem Niveau der mechanischen Eigenschaften umgeformt werden.

## Patentansprüche

1. Hohlkörper mit einem Fassungsvolumen von mindestens 250 ml, dessen Hülle aus schlagzähem Polystyrol besteht und durch Spritzstreckblasen hergestellt wird, wobei die biaxiale Verstreckung der Kautschuk-Teilchen ein mittleres Aspektverhältnis aus Längsschnitt und Querschnitt gemessen in TEM-Aufnahmen von kleiner 3 aufweist.

2. Hohlkörper nach Anspruch 1, dessen Hülle einen Schwefelgehalt unter 30 ppm aufweist.

3. Hohlkörper nach den Ansprüchen 1 und 2, wobei die Hülle zusätzlich mit einem Kunststoff mit Barriereeigenschaft ausgestattet ist.

4. Hohlkörper nach Anspruch 3, wobei als Kunststoff mit Barriereeigenschaft Polyamid, Polyvinylidenchlorid oder Styrol/Acrylnitril-Copolymere eingesetzt werden.

5. Hohlkörper nach den Ansprüchen 1 bis 4, wobei die Hülle mit einer Schrumpffolie überzogen ist.

6. Hohlkörper nach Anspruch 5, wobei die Schrumpffolie aus einem Styrol-Butadien-Blockcopolymeren besteht.

7. Verfahren zur Herstellung von Hohlkörpern gemäß den Ansprüchen 1 bis 4, **dadurch gekennzeichnet, dass**
i) ein Granulat aus schlagzähem Polystyrol aufgeschmolzen und zu einem Vorformling spritzgegossen wird,
ii) der gebildete Vorformling in ein zweites Werkzeug übergeführt und dort gestreckt und geblasen wird.

8. Verfahren nach Anspruch 7, wobei im Schritt i) Temperaturen von 150 bis 260°C und im Schritt ii) Temperaturen von 120 bis 145°C herrschen.

9. Verfahren nach Anspruch 7 wobei im Schritt ii) ein Vorblasdruck kleiner 5 bar und später ein Blasdruck von kleiner 15 bar eingestellt wird.

10. Verwendung der Hohlkörper gemäß den Ansprüchen 1 bis 6 zum Aufbewahren von Molkereiprodukten.

## Claims

1. A blow molding having capacity of at least 250 ml, having a shell which is composed of impact-resistant polystyrene and which is produced via injection stretch blow molding where the average aspect ratio derived from longitudinal section and cross section measured in transmission electron micrographs, to give the biaxial orientation of the rubber particles, is smaller than 3.

2. The blow molding according to claim 1, whose shell has less than 30 ppm sulfur content.

3. The blow molding according to claims 1 and 2, where the shell has also been equipped with a plastic with barrier property.

4. The blow molding according to claim 3, where the plastic used with barrier property comprises polyamide, polyvinylidene chloride or styrene-acrylnitrile copolymers.

5. The blow molding according to claims 1 to 4, where the shell has been covered with a shrink film.

6. The blow molding according to claim 5, where the shrink film is composed of a styrene-butadiene block copolymer.

7. A process for production of blow moldings according to claims 1 to 4, which comprises
i) melting pellets composed of impact-resistant polystyrene and injection molding them to give a parison,
ii) transferring the resultant parison to a second mold, where it is stretched and blown.

8. The process according to claim 7, where the prevailing temperatures in step i) are from 150 to 260°C and in step ii) are from 120 to 145°C.

9. The process according to claim 7, where the preblowing pressure set in step ii) is smaller than 5 bar and the subsequent blowing pressure set is smaller than 15 bar.

10. The use of the blow moldings according to claims 1 to 6 for the storage of dairy products.

## Revendications

1. Corps creux d'une contenance d'au moins 250 ml, dont l'enveloppe est constituée d'un polystyrène résistant aux impacts et est fabriquée par injection-soufflage avec étirage, l'étirage biaxial des particules de caoutchouc présentant un rapport de forme moyen entre la section longitudinale et la section transversale, mesuré sur des images de TEM, inférieur à 3.

2. Corps creux selon la revendication 1, dont l'enveloppe présente une teneur en soufre inférieure à 30 ppm.

3. Corps creux selon les revendications 1 et 2, dans lequel l'enveloppe est également munie d'un plastique à propriété de barrière.

4. Corps creux selon la revendication 3, dans lequel du polyamide, du chlorure de polyvinylidène ou des copolymères de styrène/acrylonitrile sont utilisés en tant que plastique à propriété de barrière.

5. Corps creux selon les revendications 1 à 4, dans lequel l'enveloppe est recouverte avec un film rétractable.

6. Corps creux selon la revendication 5, dans lequel le film rétractable est constitué d'un copolymère séquencé de styrène-*butadiène.

7. Procédé de fabrication de corps creux selon les revendications 1 à 4, **caractérisé en ce que**
i) un granulat de polystyrène résistant aux impacts est fondu et moulé par pulvérisation en une préforme,
ii) la préforme formée est transférée dans un second outil et y est étirée et soufflée.

8. Procédé selon la revendication 7, dans lequel des températures de 150 à 260 °C règnent à l'étape i) et des températures de 120 à 145 °C à l'étape ii).

9. Procédé selon la revendication 7, dans lequel une pression de pré-soufflage inférieure à 5 bar et ultérieurement une pression de soufflage inférieure à 15 bar sont ajustées à l'étape ii).

10. Utilisation des corps creux selon les revendications 1 à 6 pour la conservation de produits laitiers.
